Europäisches Patentamt

European Patent Office

Office européen des brevets

(11) Numéro de publication : **0 407 280 B1**

# (12) FASCICULE DE BREVET EUROPEEN

(45) Date de publication du fascicule du brevet :
**09.12.92 Bulletin 92/50**

(21) Numéro de dépôt : **90401895.9**

(22) Date de dépôt : **29.06.90**

(51) Int. Cl.⁵ : **F16L 37/14**

(54) **Perfectionnements aux raccords de tuyauteries.**

(30) Priorité : **03.07.89 FR 8908894**

(43) Date de publication de la demande :
**09.01.91 Bulletin 91/02**

(45) Mention de la délivrance du brevet :
**09.12.92 Bulletin 92/50**

(84) Etats contractants désignés :
**AT BE CH DE DK ES FR GB GR IT LI LU NL SE**

(56) Documents cités :
**DE-A- 1 815 888
DE-A- 3 440 753
FR-A- 379 706
US-A- 1 019 000
US-A- 4 244 608
US-A- 4 632 436**

(73) Titulaire : **CHAFFOTEAUX ET MAURY
2 Rue Chaintron
F-92120 Montrouge (FR)**

(72) Inventeur : **Le Mer, Joseph
1, cité Bellevue
F-29223 St Thegonnec (FR)**
Inventeur : **Derrien, Jean-Luc
64, rue de la Petite Ville
F-22590 Pordic (FR)**

(74) Mandataire : **Behaghel, Pierre
CABINET PLASSERAUD 84 rue d'Amsterdam
F-75009 Paris (FR)**

EP 0 407 280 B1

Jouve, 18, rue Saint-Denis, 75001 PARIS

## Description

L'invention est relative aux raccords de tuyauteries.

Elle concerne plus particulièrement, parmi les raccords du genre en question, mais non exclusivement, ceux qui sont destinés à effectuer la liaison entre une pluralité de premiers embouts fixés sur un râtelier commun et autant de seconds embouts terminant des tuyauteries extérieures et dont les positions ne sont pas déterminées d'une façon rigoureuse par rapport aux premiers embouts.

Parmi les raccords de ce dernier type, on mentionne en particulier ceux qui sont utilisés pour raccorder les circuits d'eau sous pression et de gaz sous pression des chauffe-eau, chauffe-bains ou chaudières de chauffage central aux tuyauteries extérieures d'eau et de gaz correspondantes.

D'une façon connue en soi, les raccords ici considérés comprennent :

- un embout mâle propre à être fixé de façon permanente et étanche sur une extrémité d'une première tuyauterie,
- un embout femelle propre à être fixé de façon permanente et étanche sur une extrémité d'une seconde tuyauterie
- deux portées de révolution prévues respectivement sur les deux embouts et propres à définir ensemble une cavité annulaire,
- un joint annulaire d'étanchéité logé dans ladite cavité de façon à être appliqué simultanément contre les deux portées,
- deux glissières parallèles évidées transversalement dans l'embout femelle et présentant des faces latérales parallèles rectilignes,
- une collerette prévue sur l'embout mâle, collerette présentant une portée plane annulaire dans le plan transversal des glissières le plus éloigné de l'extrémité libre de cet embout,
- et une épingle dont les deux bras sont propres à coopérer avec les deux glissières, ces bras comprenant respectivement deux tronçons terminaux suffisamment écartés l'un de l'autre pour livrer passage axialement à la collerette et deux tronçons de base trop rapprochés pour livrer passage à la collerette et propres alors à buter axialement contre cette collerette en empêchant la séparation axiale mutuelle des deux embouts tout en encadrant avec un faible jeu la portion concernée de l'embout mâle, les extrémités des bras de l'épingle étant terminées par des crochets propres à buter contre des crans de l'embout femelle quand l'épingle parvient aux fins de ses courses de sortie normale, les emplacements desdits crans étant déterminés de façon telle que la butée des crochets contre ces crans corresponde juste au dégagement axial complet de la collerette par les bras de l'épingle.

Les raccords de ce genre sont économiques et présentent l'avantage de se prêter à des montages et démontages très rapides.

Mais dans les modes de réalisation de ceux-ci, connus notamment par le document US-A-1 019 000, l'une des deux portées de révolution définissant le logement du joint est une surface cylindrique contre laquelle le joint vient radialement en contact avec des possibilités de glissements axiaux relatifs.

L'étanchéité qui en résulte peut être suffisante pour certaines applications telles que les raccordements des tuyauteries d'arrosage, mais elle ne suffit pas pour les applications mentionnées ci-dessus.

L'invention a pour but, surtout, de rendre les raccords du genre en question tels qu'ils assurent une étanchéité améliorée.

A cet effet dans les raccords selon l'invention les portées de révolution définissant le logement pour le joint annulaire sont respectivement une coupelle ménagée dans l'embout femelle, ouverte axialement vers la sortie de cet embout et un anneau plat terminal de l'embout mâle, l'épingle est une pièce plate à faces parallèles dont la face de chaque tronçon de base propre à prendre appui axialement sur la collerette comprend une face transversale plane qui est prolongée à l'extrémité, de ce tronçon de base, la plus éloignée du fond de l'épingle, par une rampe agencée de façon à faciliter le début du contact glissant entre l'épingle et la collerette à bloquer, et les faces axialement en regard de l'épingle et des glissières présentent des creux et reliefs complémentaires propres à coopérer mutuellement quand l'épingle parvient en sa position la plus enfoncée transversalement de façon à empêcher alors tout déplacement involontaire de l'épingle vers sa sortie.

Dans des modes de réalisation préférés, on a recours en outre à l'une et/ou à l'autre des dispositions suivantes :
- le joint d'étanchéité annulaire présente un profil ouvert radialement vers son axe,
- l'épingle est munie d'au moins un bossage propre à venir buter contre une portée de l'embout femelle quand l'épingle se trouve en sa position la plus dégagée transversalement, ce qui empêche les déplacements involontaires de cette épingle à partir de cette position.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant au dessin ci-annexé d'une manière bien entendu non limitative.

Les figures 1 et 2, de ce dessin, montrent un raccord de tuyauterie établi selon l'invention en son état de raccordement, c'est-à-dire épingle enfoncée, respectivement en vue axiale selon la flèche I, de la figure 2 et en coupe axiale selon II-II, figure 1.

La figure 3 montre semblablement à la figure 1 le même raccord dont on a enlevé l'embout mâle, en son état d'attente de cet embout, c'est-à-dire épingle sortie.

La figure 4 montre en coupe axiale selon IV-IV, figure 3, le raccord de cette figure 3, mais avec le joint d'étanchéité enlevé.

La figure 5 montre très schématiquement une chaudière mixte, c'est-à-dire apte à chauffer de l'eau, d'une part, pour le chauffage central par circulation d'eau chaude dans des radiateurs et, d'autre part, pour le puisage d'eau chaude sanitaire, chaudière équipée de cinq raccords selon l'invention.

Le raccord considéré comprend:

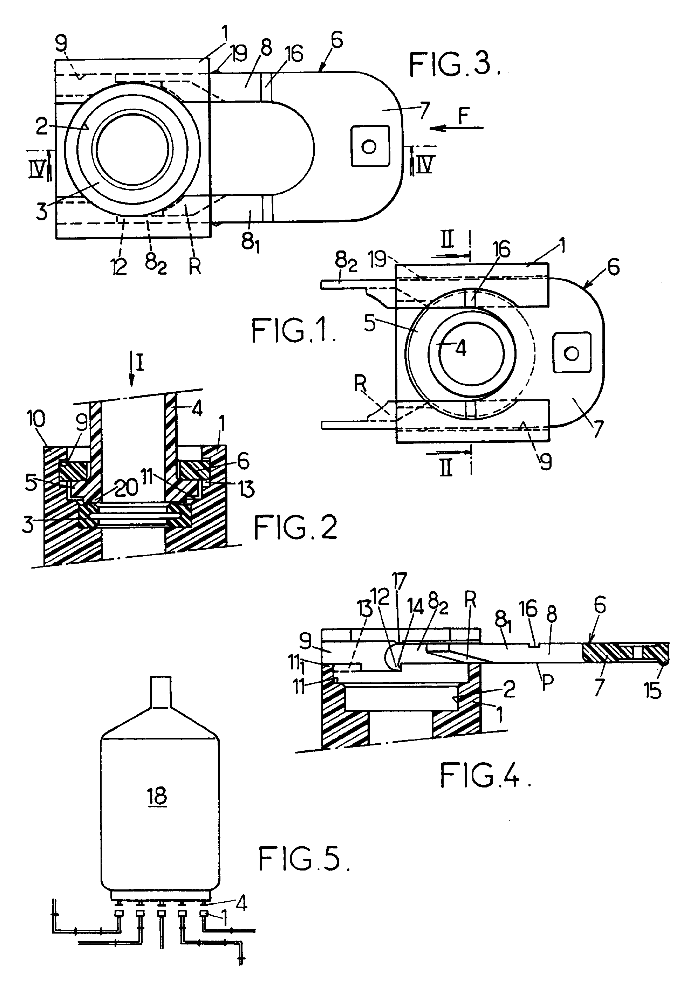

- un embout femelle 1 présentant une extrémité, par exemple filetée, agencée de façon à pouvoir être raccordée de façon permanente et étanche à une première tuyauterie et, de l'autre côté, une coupelle terminale 2 (figure 4) ouverte axialement vers l'extérieur,

- un joint d'étanchéité annulaire 3 (figure 2) logé dans la coupelle 2,

- et un embout mâle 4 de arme générale cylindrique, comprenant une extrémité, par exemple filetée, agencée de façon à pouvoir être raccordée de façon permanente et étanche à une seconde tuyauterie et, de l'autre côté, une collerette extérieure 5 (figures 1 et 2) dont la portion intérieure est elle-même prolongée axialement par un ressaut annulaire plat 20 (figure 4).

Pour effectuer le raccordement étanche désiré entre les deux tuyauteries ci-dessus, c'est-à-dire entre les deux embouts 1 et 2, il faut serrer et maintenir serrée la collerette 5 contre le fond de la coupelle 2 avec écrasement du joint intermédiaire 3.

Au lieu de réaliser comme connu ce serrage par vissage, ce qui est long, difficile à doser, exige un alignement axial rigoureux des embouts à réunir et conduit à l'exécution de pièces coûteuses ledit serrage est ici obtenu avec son dosage idéal par simple coulissement rectiligne transversal d'une épingle 6, sans qu'il y ait à respecter des conditions rigoureuses pour l'alignement axial des embouts, et sans qu'il soit besoin de recourir à des pièces coûteuses, bien au contraire, puisque les différents éléments constitutifs du raccord, à l'exception du joint, savoir les deux embouts et l'épingle, peuvent être constitués en une matière synthétique moulée à bas prix de revient.

L'épingle 6 est une pièce plate et mince présentant un fond 7 de relativement grande hauteur et deux bras 8 rectilignes et relativement minces.

Les bras 8 sont reçus dans deux rainures ou glissières rectilignes 9 évidées dans le bord interne de la coupelle 2, ou plus précisément dans deux rebords parallèles 10 prolongeant axialement vers l'extérieur ledit bord de coupelle.

Ces rainures ou glissières 9 présentent une section droite en U et sont ouvertes en direction l'une de l'autre, c'est-à-dire selon une direction transversale du raccord.

Chaque bras 8 présente une surface extérieure prismatique dont le profil ou contour est sensiblement complémentaire de celui de l'une des rainures 9, ce qui permet de guider les glissements desdits bras 8 le long desdites rainures 9.

Chaque bras 8 comporte un tronçon de base $8_1$ prolongé par un tronçon terminal $8_2$.

Les tronçons terminaux $8_2$ sont suffisamment étroits pour que la collerette 5 et le joint 3 puissent passer axialement entre eux, comme visible sur la figure 3.

Pour ce qui est de l'épaisseur transversale des tronçons de base $8_1$, elle est choisie de façon telle que la portion cylindrique de l'embout mâle 4 puisse encore passer entre eux, mais pas la collerette 5, ainsi que visible sur la figure 1.

La portion interne de chaque tronçon de base $8_1$, portion qui déborde transversalement vers l'intérieur de l'épingle par rapport au tronçon terminal $8_2$ correspondant, présente une face transversale plane P du côté de la coupelle 2 (figure 4).

C'est cette face P qui est appliquée axialement contre la collerette 5 pour effectuer le raccordement étanche entre les deux embouts.

Ladite face P est prolongée à l'extrémité, du tronçon de base $8_1$ considéré, la plus éloignée du fond 7 de l'épingle, par une rampe R qui est inclinée en biais, ainsi que visible sur l'ensemble des figures 1 et 4, de façon à faciliter les débuts des contacts glissants réalisés entre l'épingle 6 et la collerette 5 à verrouiller.

Le fonctionnement du raccord ainsi décrit est le suivant.

Initialement, l'épingle 6 se trouve en une position sortie telle que visible sur la figure 3, de sorte que l'accès de la coupelle 2 est libre axialement pour le joint 3 et la collerette 5.

On met alors en place le joint 3 (figures 2 et 3) dans la coupelle 2.

Comme visible sur la figure 2, ce joint 3 présente avantageusement un profil ouvert vers l'axe du raccord, de sorte qu'il a tendance à s'ouvrir axialement d'autant plus que la pression du fluide interne est plus élevée, ce qui assure une étanchéité très efficace et un verrouillage absolu de l'épingle.

Au montage, l'épaisseur axiale du joint 3 est supérieure à celle de la coupelle 2 qui le reçoit diminuée de celle du ressaut annulaire terminal intérieur 20 de l'embout 4.

On place ensuite la collerette 5 de l'embout 4 en regard d'un siège annulaire 11 prévu pour lui à la sortie axiale de la coupelle 2, siège bordé par une paroi cylindrique $11_1$ (figure 4), ce qui fait reposer le ressaut annulaire 20 dudit embout sur le joint 3.

Puis on applique une légère pression axiale sur cet embout 4, ce qui fait écraser le joint 3 par le ressaut 20, et on repousse transversalement l'épingle 6 selon la flèche F (figure 3).

Les rampes R de cette épingle viennent alors au contact avec la collerette 5, puis ses faces P et, lorsque l'épingle 6 est parvenue à la fin de sa course transversale d'enfoncement comme visible sur la figure 1, ce sont lesdites faces P qui, en prenant appui axialement contre la collerette 5, assurent un écrasement axial permanent du joint 3, et donc l'étanchéité et l'irréversibilité du raccordement réalisé entre les deux embouts 1 et 4.

On prévoit aux extrémités des bras 8 de l'épingle des crochets ou becs 12 faisant saillie sur ces bras en direction de la coupelle 2 (voir figure 4).

Des entrées élargies 13 des glissières 9 sont évidées dans les rebords 10 pour recevoir de façon coulissante lesdits crochets 12.

Les fonds de ces entrées élargies sont délimités par des ressauts ou crans 14 dont l'emplacement est prévu de façon telle que, lorsque chaque crochet 12 vient buter contre le cran associé 14, ce qui correspond à la fin de la course de sortie normale de l'épingle 6, celle-ci se trouve juste en sa position pour laquelle elle rend possible l'accessibilité axiale complète des logements 2 et $11,11_1$ pour le joint 3 et la collerette 5.

Cette disposition est intéressante en ce qu'elle limite la course de sortie des épingles 6, ce qui évite de les perdre.

Bien entendu il faut prévoir une possibilité de montage de chaque épingle 6 sur l'embout 1 correspondant : ce montage se fait dans le sens inverse à celui de la flèche F, par introduction première du fond 7 de cette épingle dans l'ouverture définie par les deux rainures 9.

On voit encore sur la figure 4 :
- en 15, un petit bossage prévu sur le fond de l'épingle 6 pour éviter une extraction trop facile de cette épingle dans le sens de la flèche F,
- en 19, d'autres petits bossages ou picots prévus sur les tranches extérieures des bras de l'épingle et propres à buter contre des portées en regard de l'embout 1 telles que les bords des orifices de sortie des glissières 9 de façon à interdire les rentrées involontaires de l'épingle quand celle-ci se trouve en sa position dégagée ou sortie au maximum (figure 3),
- en 16 et 17, des petits creux et reliefs complémentaires, tels que rainures et nervures, prévus respectivement sur des faces axialement en regard de l'épingle 6 et de son logement et propres à coopérer à la façon d'un déclic lorsque l'épingle parvient en sa position totalement enfoncée (figure 1) de façon à empêcher alors les déplacements involontaires de cette épingle vers sa sortie.

Il est à noter que cette coopération entre les creux et reliefs 16 et 17 peut être assurée avec fermeté par la pression même du fluide contenu dans le raccord, en particulier lorsque le joint 3 présente le profil ouvert mentionné ci-dessus : dans ce cas, il n'est pas possible de démonter le raccord tant que la pression interne est maintenue, ce qui constitue un avantage très important au double point de vue de l'étanchéité et de la sécurité.

En suite de quoi, et quel que soit le mode de réalisation adopté, on obtient finalement un raccord dont la constitution et le fonctionnement résultent suffisamment de ce qui précède.

Ce raccord présente de nombreux avantages par rapport à ceux antérieurement connus, notamment en ce qui concerne la qualité de l'étanchéité assurée par l'écrasement axial du joint, l'économie puisque chacun des principaux composants du raccord (embouts 1,4 et épingle 6) peut être constitué en une matière synthétique moulée à bas prix de revient, la rapidité et la fiabilité du montage, lequel peut être assuré par un simple coulissement rectiligne de l'épingle 6, la simplicité du démontage qui peut être lui-même réalisé par simple coulissement de ladite épingle 6 selon le sens inverse du précédent, et la possibilité de réaliser des raccordements entre des embouts qui ne sont pas rigoureusement alignés, le décalage transversal entre ces embouts pouvant facilement atteindre plusieurs mm.

Il est en effet possible de prévoir un jeu radial relativement important entre la collerette 5 et son logement $11,11_1$ dans l'embout 1 et la collerette peut occuper n'importe laquelle des différentes positions excentrées relatives rendues possibles par l'existence de ce jeu.

Il résulte de cette dernière remarque que l'invention est particulièrement intéressante dans le cas où il est nécessaire de réaliser une pluralité de raccordements entre des premiers embouts 4 portés par un râtelier fixe commun et une pluralité de seconds embouts 1 dont les positions transversales par rapport aux premiers ne sont pas définies avec une grande exactitude.

C'est en particulier le cas lorsque le râtelier sur lequel sont montés les premiers embouts est l'embase d'un générateur d'eau chaude tel qu'un chauffe-eau, chauffe-bains ou chaudière de chauffage central : à titre illustratif, on a représenté schématiquement en 18 sur la figure 5 une chaudière mixte, c'est-à-dire destinée à chauffer de l'eau d'une part pour le chauffage central par circulation d'eau chaude dans des radiateurs et d'autre part pour le puisage d'eau chaude sanitaire ; cette chaudière comprend cinq raccords à eau réalisés selon l'invention à raison d'un pour le gaz et de deux pour chacun des deux circuits de chauffage et de puisage, l'un des deux raccords de chaque paire correspondant à l'arrivée de l'eau à réchauffer et l'autre, au départ de l'eau chaude.

## Revendications

1.    Raccord de tuyauteries comprenant un embout mâle (4) propre à être fixé de façon permanente et étanche sur une extrémité d'une première tuyauterie, un embout femelle (1) propre à être fixé de façon permanente et étanche sur une extrémité d'une seconde tuyauterie, deux portées de révolution prévues respectivement sur les embouts et propres à définir ensemble une cavité annulaire, un joint annulaire d'étanchéité (3) logé dans ladite cavité de façon à être appliqué simultanément contre les deux portées, deux glissières parallèles (9) évidées transversalement dans l'embout femelle et présentant des faces latérales parallèles rectilignes, une collerette (5) prévue sur l'embout mâle, collerette présentant une portée plane annulaire dans le plan transversal des glissières le plus éloigné de l'extrémité libre de cet embout, et une épingle (6) dont les deux bras (8) sont propres à coopérer avec les deux glissières, ces bras comprenant respectivement deux tronçons terminaux ($8_2$) suffisamment écartés l'un de l'autre pour livrer passage axialement à la collerette et deux tronçons de base ($8_1$) trop rapprochés pour livrer passage à la collerette et propres alors à buter axialement contre cette collerette en empêchant la séparation axiale mutuelle des deux embouts tout en encadrant avec un faible jeu la portion concernée de l'embout mâle, les extrémités des bras de l'épingle étant terminées par des crochets (12) propres à buter contre des crans (14) de l'embout femelle quand l'épingle parvient aux fins de ses courses de sortie normale, les emplacements desdits crans étant déterminés de façon telle que la butée des crochets contre ces crans corresponde juste au dégagement axial complet de la collerette par les bras de l'épingle, les portées de révolution définissant le logement pour le joint annulaire étant respectivement une coupelle (2) ménagée dans l'embout femelle, ouverte axialement vers la sortie de cet embout et un anneau plat terminal (20) de l'embout mâle, l'épingle étant une pièce plate à faces parallèles dont la face de chaque tronçon de base ($8_1$) propre à prendre appui axialement sur la collerette (5) comprend une face transversale plane (P) qui est prolongée à l'extrémité, de ce tronçon de base, la plus éloignée du fond (7) de l'épingle, par une rampe (R) agencée de façon à faciliter le début du contact glissant entre l'épingle (6) et la collerette (5) à bloquer, et les faces axialement en regard de l'épingle (6) et des glissières (9) présentant des creux et reliefs complémentaires (16,17) propres à coopérer mutuellement quand l'épingle parvient en sa position la plus enfoncée transversalement de façon à empêcher alors tout déplacement involontaire de l'épingle vers sa sortie.

2.    Raccord selon la revendication 1, caractérisé en ce que le joint d'étanchéité annulaire (3) présente un profil ouvert radialement vers son axe.

3.    Raccord selon l'une quelconque des précédentes revendications, caractérisé en ce que-l'épingle (6) est munie d'au moins un bossage (19) propre à venir buter contre une portée de l'embout femelle quand l'épingle se trouve en sa position la plus dégagée transversalement, ce qui empêche les déplacements involontaires de cette épingle à partir de cette position.


## Patentansprüche

1.    Rohrverbindung bestehend aus folgenden Teilen:
      Einem männlichen Übergangsrohrstück (4), das ständig und dicht an einem Ende eines ersten Rohres befestigt werden kann, einem weiblichen Übergangsrohrstück (1), das dauernd und dicht an einem Ende eines zweiten Rohres anbringbar ist, zwei Umdrehungslagerflächen, die jeweils an den Übergangsrohrstücken vorgesehen sind und gemeinsam einen ringförmigen Hohlraum bilden können, einer ringförmigen Dichtung (3), die in dem Hohlraum so angeordnet ist, daß sie gleichzeitig an den beiden Lagerflächen anliegt, zwei parallelen Rinnen (9), die in Querrichtung in dem weiblichen Anschlußrohrstück ausgespart sind und geradlinige parallele Seitenflächen aufweisen, einem an dem männlichen Anschlußrohrstück vorgesehenen Flansch (5) mit einer ringförmigen ebenen Anlagefläche in der Querebene der Rinnen, die am weitesten von dem freien Ende des Rohrstückes entfernt ist, und einer Klammer (6), deren zwei Arme (8) so ausgebildet sind, daß sie mit den beiden Rinnen zusammenwirken können, wobei die Arme Endabschnitte ($8_2$), die ausreichend voneinander entfernt sind, um in axialer Richtung den Flansch durchzulassen, und Basisabschnitte ($8_1$) enthalten, deren Abstand voneinander zu gering ist, um den Flansch durchzulassen und die sich daher axial gegen den Flansch anlegen können, und dadurch die axiale Trennung der beiden Anschlußstücke voneinander verhindern, wobei sie mit geringem Spiel den entsprechenden Abschnitt des männlichen Anschlußrohrstückes umfassen, und die Enden der Arme der Klammer mit Haken (12) versehen sind, die gegen Einkerbungen (14) des weiblichen Übergangsrohrstückes stoßen, wenn die Klammer das Ende des normalen Austrittsweges erreicht, und die Stellen, an denen die Einkerbungen angebracht sind, so festgelegt werden, daß, wenn die Haken gegen die Einkerbungen stoßen die Arme der Klammer den Flansch in axialer Richtung gerade freigeben und wobei ferner die Umdrehungslagerflächen, die das Lager für die Ringdichtung bilden, aus einer Schale (2), die in dem weiblichen Übergangsrohrstück ausgenommen und axial in Richtung des Ausgangsendes des Rohrstückes offen ist, und einem flachen ringförmigen Endabschnitt (20) des männlichen Anschlußrohrstückes gebildet sind, die Klammer, aus einem flachen Werkstück mit parallelen Oberflächen besteht, wobei die Oberfläche jedes Basisabschnittes ($8_1$), der sich in axialer Richtung an dem Flansch (5) abstützen kann, eine in Querrichtung verlaufende ebene Fläche (P) enthält, die an dem Ende des Basisabschnittes, das am weitesten von dem Steg (7) der Klammer entfernt ist, in eine Schrägfläche (R) übergeht, die so ausgebildet ist, daß der Beginn des Gleitkontaktes zwischen der Klammer (6) und dem zu blockierenden Flansch (5) erleichtert wird, und die Flächen, die auf die Klammer (6) und die Rinnen (9) in axialer Richtung gegenüber sind, komplementäre Hohlräume und Einkerbungen (16, 17) aufweisen, die wechselseitig zusammenwirken können, wenn die Klammer in die Stellung gelangt, in der sie in Querrichtung am weitesten eingeschoben ist, um dadurch jede unerwünschte Verschiebung der Klammer in Richtung ihres Austrittes zu verhindern.

2. Rohrverbindung nach Anspruch 1, dadurch gekennzeichnet, daß die ringförmige Dichtung (2) ein radial in Richtung ihrer Achse offenes Profil aufweist.

3. Rohrverbindung nach einem der vorhergehenden Ansprüche, dadurch gekennzeichnet, daß die Klammer (6) mit wenigstens einem Höcker (19) versehen ist, der gegen eine Fläche des weiblichen Verbindungsrohrstückes stoßen kann, wenn die Klammer sich in der Stellung befindet, in der sie in Querrichtung am weitesten herausgezogen ist, wodurch unerwünschte Verschiebungen der Klammer aus dieser Stellung verhindert werden.

**Claims**

1. Pipe coupling comprising a male end-piece (4) adapted to be permanently and sealingly fixed on one end of a first pipe, a female end piece (1) adapted to be permanently and sealingly fixed on an end of a second pipe, two surfaces of revolution provided respectively on the two end-pieces and adapted for defining together an annular cavity, an annular seal (3) housed in said cavity so as to be applied simultaneously against the two surfaces, two parallel slides (9) formed transversely in the female end-piece and having parallel rectilinear faces, a collar (5) provided on the male end-piece, which collar has a flat annular surface in the transverse plane of the slides the furthest away from the free end of this end-piece, and a pin (6), the two arms (8) of which are adapted to cooperate with the two slides, these arms comprising respectively two end portions ($8_2$) spaced sufficiently apart from each other to let the collar pass axially and two base sections ($8_1$) too close together to allow the collar to pass and adapted for abutting axially against this collar while preventing the mutual axial separation of the two end-pieces and surrounding, with slight play, the portion concerned of the male end-piece, the ends of the arms of the pin ending in hooks (12) adapted to abut against bearings (14) of the female end-piece when the pin reaches the end of its normal outgoing travel, the positions of said bearings being determined so that abutment of the hooks against these bearings corresponds just to the complete axial release of the collar by the arms of the pin, the surfaces of revolution defining the housing for the annular seal being respectively a cup (2) formed in the female end-piece, open axially towards the exit of this end-piece and a flat end ring (20) of the male end-piece, the pin being a flat piece with parallel faces, the face of each base section ($8_1$) of which, adapted to bear axially on the collar (5), comprises a transverse flat face (P) which is extended at the end, of this base section, the most distant from the bottom (7) of the pin, by a ramp (R) arranged so as to facilitate the beginning of the sliding contact between the pin (6) and the collar (5) to be locked, and the axially facing faces of the pin (6) and of the slides (9) having complementary hollows and reliefs (16,17) for mutually cooperating when the pin reaches its most transversely driven in position so as to then prevent any involuntary movement of the pin towards its exit.

2. A coupling according to claim 1, characterized in that the annular seal (3) has a profile open radially towards its axis.

3. A coupling according to any one of the preceding claims, characterized in that the pin (6) has at least one boss (19) adapted to abut against a surface of the female end-piece when the pin is in its most transversely disengaged position, which prevents the involuntary movement of the pin from this position.

FIG.3.

FIG.1.

FIG.2

FIG.4.

FIG.5.